(19) Europäisches Patentamt / European Patent Office / Office européen des brevets

(11) **EP 2 882 085 A1**

(12) **DEMANDE DE BREVET EUROPEEN**

(43) Date de publication:
**10.06.2015 Bulletin 2015/24**

(51) Int Cl.:
*H02M 3/158* [(2006.01)]     *H02M 1/00* [(2007.01)]

(21) Numéro de dépôt: **13195405.9**

(22) Date de dépôt: **03.12.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **EM Microelectronic-Marin SA 2074 Marin (CH)**

(72) Inventeurs:
• **Saby, Jérôme**
  **2000 Neuchâtel (CH)**
• **Théoduloz, Yves**
  **1400 Yverdon (CH)**

(74) Mandataire: **Giraud, Eric et al**
  **ICB**
  **Ingénieurs Conseils en Brevets SA**
  **Faubourg de l'Hôpital 3**
  **2001 Neuchâtel (CH)**

(54) **Convertisseur DC-DC à fonctionnement en mode discontinu**

(57)    Un convertisseur DC-DC (1) comprend une inductance (L) coopérant avec un premier commutateur (2) et un second commutateur (3) fonctionnant en alternance, pour fournir une tension de sortie (Vout) d'un niveau supérieur au niveau d'une tension d'entrée (Vin). Le convertisseur comprend une unité de gestion de commutation (20) des commutateurs pour déterminer un premier temps d'enclenchement du premier commutateur et un second temps d'enclenchement du second commutateur. L'unité de gestion de commutation comprend un circuit de conversion tension-courant pour convertir en courant une tension de comparaison, qui est la différence entre la tension de sortie et la tension d'entrée, un premier courant (I1) étant fourni par le circuit de conversion pour charger un premier condensateur (C1) jusqu'à un premier seuil de tension pour déterminer le premier temps d'enclenchement et un second courant (I2) étant fourni par le circuit de conversion pour charger un second condensateur (C2) jusqu'à un second seuil de tension pour déterminer le second temps d'enclenchement.

Fig. 2

**Description**

L'invention concerne un convertisseur DC-DC fonctionnant en mode discontinu. Le convertisseur DC-DC comprend une inductance coopérant avec un premier commutateur et un second commutateur fonctionnant en alternance, afin de fournir une tension de sortie d'un niveau supérieur, égal ou inférieur au niveau d'une tension d'entrée. Le convertisseur comprend également une unité de gestion de commutation des commutateurs pour déterminer un premier temps d'enclenchement du premier commutateur durant lequel un courant croissant traverse l'inductance, et un second temps d'enclenchement du second commutateur durant lequel un courant décroissant traverse l'inductance.

L'invention concerne également un procédé de mise en action d'un convertisseur DC-DC.

Un convertisseur de tension DC-DC permet de convertir une tension continue d'entrée, qui peut être une tension d'une source de tension continue, en une tension continue de sortie par l'intermédiaire d'une inductance entre l'entrée et la sortie comme élément réactif. Comme la source de tension peut être une batterie, qui se décharge au cours du temps, le convertisseur peut être parfois prévu pour garantir également une tension de sortie à une valeur déterminée indépendamment d'une chute de tension d'entrée.

Différents types de convertisseur DC-DC inductif peuvent être utilisés. Un premier type de convertisseur DC-DC est défini comme un convertisseur Buck pour fournir une tension de sortie de valeur inférieure à la valeur de la tension d'entrée. Un second type de convertisseur DC-DC est défini comme un convertisseur Boost pour fournir une tension de sortie de valeur supérieure à la valeur de la tension d'entrée. Un troisième type de convertisseur DC-DC peut combiner un convertisseur Buck avec un convertisseur Boost pour élever ou abaisser la tension de sortie.

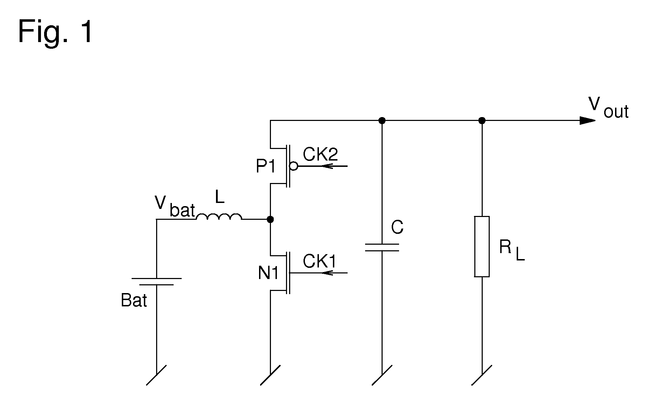

A la figure 1, il est représenté un convertisseur DC-DC inductif, qui est un convertisseur Boost généralement utilisé dans des circuits électroniques à faible consommation, alimentés par une batterie de petite dimension. Le convertisseur DC-DC comprend une inductance L comme élément réactif, un transistor PMOS P1 et un transistor NMOS N1, qui agissent comme des interrupteurs ou commutateurs. Les transistors PMOS P1 et NMOS N1 sont reliés en série. L'inductance L est disposée entre une borne positive Vbat d'une source de tension continue Bat, et un noeud de connexion des bornes de drain des transistors P1 et N1. La borne de source du transistor N1 est reliée à une borne de masse, alors que la borne de source du transistor P1 est reliée à une borne de sortie Vout, où un filtrage est opéré par le condensateur C mis en parallèle avec une résistance de charge $R_L$.

Les transistors P1 et N1 sont commandés de manière alternative chacun par un signal de commande respectif CK1 et CK2 sur leur borne de grille respective. Le signal de commande CK1 définit une première phase de commande du convertisseur, alors que le signal de commande CK2 définit une seconde phase de commande du convertisseur. Pendant une première période de temps déterminée, le signal de commande CK1 est à l'état haut pour rendre conducteur le transistor NMOS N1. Pendant une seconde période de temps déterminée successive à la première période de temps, le signal de commande CK2 est à l'état bas pour rendre conducteur le transistor PMOS P1.

Durant la première période de temps, le courant dans l'inductance L croît linéairement, alors que durant la seconde période de temps, le courant dans l'inductance L décroît linéairement pour arriver à zéro dans un cas idéal. Si au terme de la seconde période de temps, le courant à travers l'inductance n'est pas nul, une adaptation de la seconde période de temps doit être effectuée. Cette adaptation de la seconde période de temps est généralement nécessaire pour un convertisseur DC-DC fonctionnant en mode discontinu. Elle nécessite parfois au moins un comparateur rapide, qui engendre une forte consommation.

Dans le brevet EP 2 104 213 B1, il est décrit un procédé d'asservissement d'un convertisseur DC-DC fonctionnant en mode discontinu. La durée de la seconde période de temps, pendant laquelle le courant dans l'inductance décroît, est contrôlée pour que le courant soit nul au terme de la seconde période de temps. Le signe de la surtension générée par l'inductance lors de la commutation au terme de la seconde période de temps permet d'ajuster la durée de la seconde période de temps. Cependant avec un tel principe d'ajustement de la seconde période de temps par le contrôle de surtensions, il est nécessaire d'avoir des composants électroniques rapides, ce qui engendre une consommation importante constituant un inconvénient.

L'invention a donc pour but de pallier aux inconvénients de l'état de la technique en fournissant un convertisseur DC-DC fonctionnant en mode discontinu, qui permet facilement d'ajuster les temps de croissance et décroissance du courant à travers l'inductance de manière à avoir un courant nul au terme d'une seconde période de temps de décroissance du courant dans l'inductance.

A cet effet, l'invention concerne un convertisseur DC-DC à fonctionnement en mode discontinu cité ci-devant, qui comprend les caractéristiques définies dans la revendication indépendante 1.

Des formes d'exécution particulière du convertisseur DC-DC sont définies dans les revendications dépendantes 2 à 13.

Un avantage du convertisseur DC-DC selon l'invention réside dans le fait qu'il comprend des moyens pour déterminer par calcul la durée de la seconde période de temps sur la base de la détermination de la première période de temps, afin d'avoir un courant nul à travers l'inductance au terme de la seconde période de temps.

Avantageusement, il est effectué une adaptation analogique des temps de commutation des commutateurs ou interrupteurs du convertisseur DC-DC. Cette adaptation est opérée par une unité de gestion de commutation de manière simple. Aucun traitement numérique avec un cadencement à haute fréquence n'est nécessaire, ce qui réduit la consommation d'un tel convertisseur DC-DC.

Avantageusement le premier temps d'enclenchement ou de fermeture du premier commutateur lié à l'inductance dans une première phase d'asservissement du convertisseur DC-DC, est déterminé sur la base de la charge d'un premier condensateur. La charge du premier condensateur est effectuée par un premier courant provenant d'un miroir de courant et généré par une résistance alimenté par la différence de tension entre la tension de sortie et la tension d'entrée. Le premier condensateur se charge jusqu'à un premier seuil de tension, qui peut avantageusement être la différence de tension entre la tension de sortie et la tension d'entrée. Ce premier temps d'enclenchement peut ainsi être défini par la valeur résistive de la résistance multipliée par la valeur capacitive du premier condensateur.

Avantageusement le second temps d'enclenchement du second commutateur lié à l'inductance dans une seconde phase d'asservissement du convertisseur DC-DC, est déterminé sur la base de la détermination du premier temps d'enclenchement. Un second condensateur est chargé par un second courant provenant du miroir de courant. Ce second condensateur se charge jusqu'à un second seuil de tension, qui est de préférence la tension d'entrée. Dans ces conditions, si les courants à travers la résistance et pour charger les condensateurs sont identiques, il est possible de déterminer facilement le second temps d'enclenchement sur la base du premier temps d'enclenchement.

A cet effet, l'invention concerne également un procédé de mise en action d'un convertisseur DC-DC, qui comprend les caractéristiques de la revendication indépendante 14.

Des étapes particulières du procédé sont définies dans les revendications dépendantes 15 et 16.

Les buts, avantages et caractéristiques du convertisseur DC-DC fonctionnant en mode discontinu, et du procédé de mise en action du convertisseur apparaîtront mieux dans la description suivante sur la base d'au moins une forme d'exécution du convertisseur non limitative illustrée par les dessins sur lesquels :

la figure 1 déjà citée représente un convertisseur DC-DC de type Boost de l'état de la technique,

la figure 2 représente de manière simplifiée une forme d'exécution d'un convertisseur DC-DC avec une unité de gestion des temps d'ouverture et fermeture de commutateurs pour la croissance et la décroissance du courant à travers une inductance du convertisseur selon l'invention, et

la figure 3 représente des graphiques de la forme du courant traversant l'inductance et des signaux de commande pour l'adaptation des temps de croissance et décroissance du courant de l'inductance du convertisseur DC-DC selon l'invention.

Dans la description suivante, tous les éléments du convertisseur DC-DC fonctionnant en mode discontinu, qui sont bien connus de l'homme du métier dans ce domaine technique ne seront relatés que de manière simplifiée. Il est fait principalement référence à un convertisseur Boost, même si un autre type de convertisseur peut être aussi prévu avec l'adaptation des temps de croissance et décroissance du courant à travers l'inductance selon l'invention.

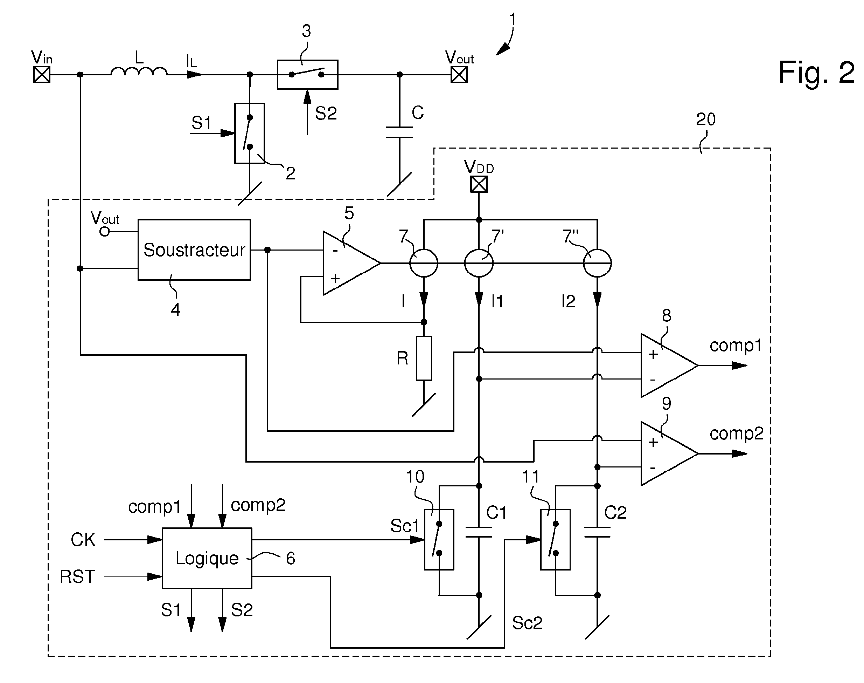

A la figure 2, il est représenté schématiquement un convertisseur DC-DC du type Boost 1, c'est-à-dire un convertisseur élévateur de tension avec un niveau de la tension de sortie Vout supérieur au niveau de la tension d'entrée continue Vin. Cette tension d'entrée Vin peut provenir d'une batterie ou d'une cellule solaire, qui ne sont pas représentées. Dans le cas d'une cellule solaire, la tension en entrée peut être de l'ordre de 0.6 V, alors que la tension de sortie peut être de l'ordre de 3 V, mais d'autres valeurs peuvent être envisagées. Un condensateur C de stockage de la tension de sortie Vout est relié à la sortie du convertisseur DC-DC 1. Ce condensateur C peut aussi être connecté en parallèle à la sortie à une résistance de charge non représentée, ce qui peut définir un composant de filtrage.

Le convertisseur DC-DC comprend notamment une inductance L comme élément réactif, un premier commutateur 2 contrôlé par un premier signal de commande S1 et un second commutateur 3 contrôlé par un second signal de commande S2. Les signaux de commandes sont générés par une unité de gestion de commutation 20 expliquée ci-après avec un contrôle du temps d'enclenchement ou de fermeture analogiquement des premier et second commutateurs 2 et 3. Dans une seconde phase d'asservissement du convertisseur DC-DC, le temps d'enclenchement du second commutateur 3 est déterminé par calcul en fonction du temps d'enclenchement du premier commutateur 2 de la première phase.

Dans ce convertisseur DC-DC, on peut définir la relation entre le courant $I_L$ traversant l'inductance L et la tension $U_L$. Cette relation est définie par l'équation $U_L = L \cdot (dI_L/dt)$. Comme la tension $U_L$ est de manière générale constante, le courant $I_L$ traversant l'inductance L est linéairement croissant ou décroissant. Cette tension $U_L$ peut être la tension d'entrée Vin. Ainsi, le temps t1 pendant lequel le premier commutateur 2 est rendu conducteur, c'est-à-dire laissant passer le courant croissant à travers l'inductance L, est défini par l'équation $t1 = L \cdot I_L / Vin$. Cette tension $U_L$ peut être aussi la différence entre la tension de sortie Vout et la tension d'entrée Vin. Ainsi, le temps t2 pendant lequel le second commutateur 3 est rendu conducteur, c'est-à-dire laissant passer le courant décroissant à travers l'inductance L, est défini par l'équation t2 = L·$I_L$/(Vout-Vin). Il est donc possible de déterminer le temps t2 sur la base du temps t1 par l'équation t2 = t1·(Vin/(Vout-Vin)) dans un cas idéal.

Pour déterminer les premier et second temps d'enclenchement t1 et t2 des deux commutateurs 2 et 3, l'unité de gestion de commutation 20 comprend un circuit de conversion tension-courant. Ce circuit de conversion tension-courant est prévu pour convertir en courant une tension de comparaison, qui est la différence entre la tension de sortie Vout et la tension d'entrée Vin. Un premier courant I1 est prévu pour charger un premier condensateur C1 pour déterminer le premier temps d'enclenchement t1 et un second courant I2 est prévu pour charger un second condensateur C2 pour déterminer le second temps d'enclenchement t2. Cette différence de tension Vout-Vin peut être fournie par un soustracteur 4 de l'unité de gestion de commutation 20. Ce soustracteur 4 reçoit en entrée la tension d'entrée Vin et la tension de sortie Vout. La différence de tension Vout-Vin doit être positive pour opérer la conversion tension-courant. Pour un convertisseur de type Buck, cela nécessite d'effectuer la différence de tension Vin-Vout.

Le circuit de conversion tension-courant comprend un amplificateur-comparateur 5, dont une première entrée reçoit la différence de tension Vout-Vin et une seconde entrée est reliée à une résistance R. La sortie de l'amplificateur-comparateur 5 commande un miroir de courant 7, 7', 7", dont une première branche est reliée à la résistance R pour déterminer le courant I, I1, I2 dans chaque branche du miroir de courant. Le courant de base I dans la première branche est donc défini par l'équation I = (Vout-Vin)/R. Un premier courant miroité I1 dans une seconde branche 7' du miroir de courant permet de charger un premier condensateur C1 de l'unité de gestion de commutation 20 pour déterminer le premier temps d'enclenchement t1 du premier commutateur 2. Un second courant miroité I2 dans une troisième branche 7" du miroir de courant permet de charger un second condensateur C2 de l'unité de gestion de commutation 20 pour déterminer le second temps d'enclenchement t2 du second commutateur 3.

Pour ce convertisseur DC-DC du type Boost 1, la résistance R est reliée à la borne de masse, alors que le miroir de courant est relié à une borne de tension positive $V_{DD}$, qui peut être la tension de sortie Vout. La différence de tension Vout-Vin est fournie à l'entrée négative de l'amplificateur-comparateur 5, alors que le noeud de connexion de la résistance R à la première branche 7 du miroir de courant est relié à l'entrée positive de l'amplificateur-comparateur 5.

De préférence le miroir de courant est composé dans chaque branche 7, 7', 7" d'un transistor du type PMOS. La source de chaque transistor PMOS est reliée à la borne de tension positive $V_{DD}$. La grille de chaque transistor PMOS est reliée à la sortie de l'amplificateur-comparateur 5 pour être commandée par le signal de sortie de l'amplificateur-comparateur 5. Le drain du premier transistor PMOS est relié à la résistance R et à l'entrée positive de l'amplificateur-comparateur 5. Le drain du second transistor PMOS est relié au premier condensateur C1 et le drain du troisième transistor PMOS est relié au second condensateur C2. Chaque condensateur C1 et C2 est relié à la borne de masse.

Pour la détermination des premier et second temps d'enclenchement t1 et t2 des premier et second commutateurs 2 et 3, les condensateurs C1 et C2 sont initialement déchargés. Aucune tension sur les électrodes des condensateurs ne subsiste avant chaque détermination des premier et second temps d'enclenchement. Pour ce faire, un troisième commutateur 10 est relié et placé en parallèle du premier condensateur C1, et un quatrième commutateur 11 est relié et placé en parallèle du second condensateur C2. Le troisième commutateur 10 est commandé par un troisième signal de commande Sc1, alors que le quatrième commutateur 11 est commandé par un quatrième signal de commande Sc2. Les troisième et quatrième commutateurs 10 et 11 de l'unité de gestion de commutation 20 sont dans un état fermé pour décharger les deux condensateurs C1 et C2.

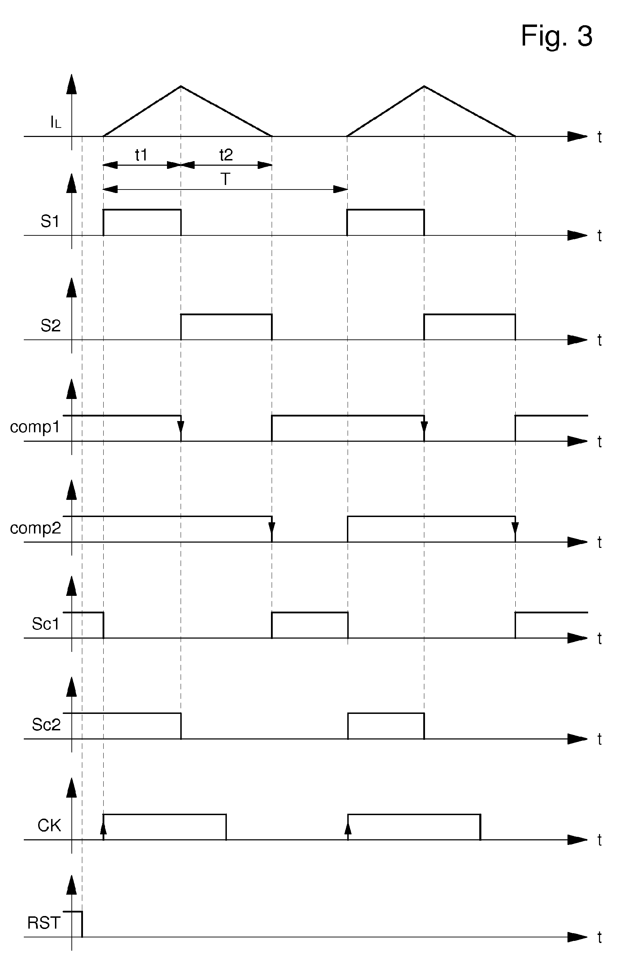

Les troisième et quatrième signaux de commande Sc1 et Sc2 sont fournis par un circuit logique 6 de l'unité de gestion de commutation 20. Ce circuit logique 6 est cadencé par un signal de cadencement CK pour définir chaque cycle d'asservissement du convertisseur DC-DC en mode discontinu comme expliqué ci-après en référence à la figure 3. Ce circuit logique 6 fournit également les premier et second signaux S1 et S2 pour commander alternativement les premier et second commutateurs 2 et 3.

Pour la détermination du premier temps d'enclenchement t1 de fermeture du premier commutateur 2, le courant I1 dans la seconde branche du miroir de courant charge le premier condensateur C1, quand le signal de cadencement CK change d'état par exemple sur un flanc montant dudit signal CK. La fréquence du signal de cadencement est l'inverse de la période T de chaque cycle. Lors du changement d'état initial du signal de cadencement CK, le troisième commutateur 10 est ouvert par le troisième signal de commande Sc1, alors que le quatrième commutateur 11 est toujours dans un état fermé par le quatrième signal de commande Sc2. Le premier condensateur C1 se charge jusqu'à un premier seuil de tension. Dès le premier seuil de tension atteint, le circuit logique 6 est commandé pour ouvrir le quatrième commutateur 11 et laisser ouvert le troisième commutateur 10. Lors de ce changement, le premier commutateur 2 est ouvert par le premier signal de commande S1 du circuit logique 6, alors que le second commutateur 3 est fermé par le second signal de commande S2 du circuit logique 6.

Pour la détermination du second temps d'enclenchement t2 de fermeture du second commutateur 3, le courant I2 de la troisième branche du miroir de courant charge le second condensateur C2. Le second condensateur C2 se charge jusqu'à un second seuil de tension. Dès le second seuil de tension atteint, le circuit logique 6 est commandé pour fermer le troisième commutateur 10, alors que le quatrième commutateur 11 peut rester dans un état ouvert jusqu'au terme de la période T du cycle. Lors de ce changement, le second commutateur 3 est ouvert par le second signal de commande S2 du circuit logique 6, alors que le premier commutateur 2 est toujours ouvert jusqu'au terme de la période T du cycle.

Il est à noter que l'unité de gestion de commutation 20 peut comprendre encore un premier comparateur 8 pour comparer la tension sur le premier condensateur C1 en charge avec le premier seuil de tension, qui peut être le signal de sortie du soustracteur 4. Ce signal de sortie est la différence entre la tension de sortie Vout et la tension d'entrée Vin. Le signal de sortie du soustracteur 4 est fourni à l'entrée positive du premier comparateur 8, alors que le premier condensateur C1 est relié à l'entrée négative du premier comparateur 8. Le premier comparateur 8 fournit un premier signal de comparaison comp1 au circuit logique 6 pour commander le circuit logique 6 dès que la tension sur le premier condensateur C1 en charge atteint la différence de tension entre la tension de sortie Vout et la tension d'entrée Vin. Le changement d'état du premier signal de comparaison comp1 commande l'ouverture du premier commutateur 2 et la fermeture du second commutateur 3 par l'intermédiaire du circuit logique 6. Le quatrième commutateur 11 est également ouvert par ce premier signal de comparaison comp1, afin de débuter le second temps d'enclenchement du second commutateur 3.

L'unité de gestion de commutation 20 peut comprendre encore un second comparateur 9 pour comparer la tension sur le second condensateur C2 en charge avec le second seuil de tension, qui peut être la tension d'entrée Vin. La tension d'entrée Vin est fournie à l'entrée positive du second comparateur 9, alors que le second condensateur C2 est relié à l'entrée négative. Le second comparateur 9 fournit un second signal de comparaison comp2 au circuit logique 6 pour commander le circuit logique 6 dès que la tension sur le second condensateur C2 en charge atteint la tension d'entrée Vin. Le changement d'état du second signal de comparaison comp2 commande l'ouverture du second commutateur 3, alors que le premier commutateur 2 reste ouvert jusqu'au terme de la période du cycle T dans ce mode de fonctionnement discontinu. Le troisième commutateur 10 est par contre commandé pour être fermé par le troisième signal de commande Sc1, afin de décharger le premier condensateur C1 avant le début d'un nouveau cycle.

Comme expliqué ci-dessus, l'invention repose sur l'idée de définir un premier temps d'enclenchement t1 du premier commutateur 2. Ce premier temps t1 est défini par la valeur résistive de la résistance R et la valeur capacitive du premier condensateur C1. Le courant dans la première branche, c'est-à-dire dans le premier transistor PMOS est défini par l'équation I = (Vout-Vin)/R. Dans le cas où le premier courant miroité I1 dans la seconde branche 7' est identique au courant I, le premier temps d'enclenchement t1 du premier commutateur 2 est défini par l'équation $t1 = C1 \cdot (Vout-Vin)/I$, donc $t1 = C1 \cdot R$. Dans le cas où le second courant miroité I2 dans la troisième branche 7" est identique au courant I, le second temps d'enclenchement t2 peut être défini par l'équation $t2 = C2 \cdot R \cdot Vin/(Vout-Vin)$. Si en plus, les valeurs capacitives des deux condensateurs C1 et C2 sont identiques, on peut définir le second temps t2 sur la base du premier temps t1 par l'équation $t2 = t1 \cdot Vin/(Vout-Vin)$.

Il est à noter encore qu'il peut être envisagé d'ajuster tout parasite dans le convertisseur DC-DC. Ces parasites concernent les valeurs ohmiques des commutateurs, la résistance de l'inductance, des erreurs de décalage des comparateurs et de l'amplificateur-comparateur, qui peut être un amplificateur opérationnel. Avec ces parasites, le temps optimal de commutation du second commutateur 3 est plus court que la valeur théorique susmentionnée. Il est possible d'ajuster les temps de commutation des premier et second commutateurs 2 et 3 en modifiant le rapport des valeurs capacitives des premier et second condensateurs C1 et C2 ou également en modifiant le rapport des courants du miroir de courant.

L'ajustement du second temps d'enclenchement t2 du second commutateur peut tenir compte des relations des capacités C1 et C2 et des courants I1 et 2 selon les formules suivantes :

$$N = C1/C2 \text{ et } M = I1/I2$$

$$t2 = (Vin/(Vout-Vin)) \cdot t1 \cdot M/N$$

Il est encore à noter que les premier et second condensateurs C1 et C2 peuvent être constitués de plusieurs condensateurs unitaires pour assurer un meilleur appariement des condensateurs. Il est aussi possible de prévoir de modifier la valeur des courants I1 et I2 par le nombre de transistors en parallèle dans chaque branche du miroir de courant.

Dans le convertisseur DC-DC, il est défini le temps d'enclenchement ou fermeture du premier commutateur 2, et le calcul de manière analogique du temps d'enclenchement ou fermeture du second commutateur 3. Il peut être prévu d'utiliser le principe de modulation de largeur d'impulsions en faisant varier le temps de fermeture du premier commutateur 2, et de ce fait également le temps de fermeture du second commutateur 3 avec une même fréquence du signal de cadencement CK. Il peut aussi être prévu de modifier la fréquence du signal de cadencement CK en fixant le temps de fermeture du premier commutateur 2 et successivement du second commutateur 3. Les temps de fermeture des premier et second commutateurs 2 et 3 sont définis ou calculé pour avoir au terme du second temps de fermeture un courant nul à travers l'inductance L.

Les premier, second, troisième et quatrième commutateurs 2, 3, 10, 11 peuvent être des transistors MOS. Il peut s'agir de quatre transistors NMOS, mais il peut être envisagé que le second commutateur 3 soit un transistor PMOS de manière à être commandé par un second signal S2 inversé. L'inductance L avec les premier et second commutateurs 2 et 3 peuvent être agencés comme représenté à la figure 1.

Dans une variante de réalisation, le convertisseur DC-DC peut être un convertisseur de type Buck. Dans ce cas de figure, il peut être repris intégralement l'unité de gestion de commutation pour commander les premier et second commutateurs. Cependant le soustracteur fourni un signal Vin-Vout sur la base duquel les courants I, I1 et I2 sont déterminés. Si la valeur capacitive C de tous les condensateurs est identique, le premier temps d'enclenchement t1 est défini par t1 = R·C. Le second temps d'enclenchement t2 est défini par t2 = R·C·(Vout/(Vin-Vout)) = t1 ·(Vout/(Vin-Vout)).

Pour mieux représenter l'agencement des différents signaux de commande ou de cadencement dans le convertisseur DC dans le mode discontinu, on peut se référer à la figure 3. Initialement il est prévu un signal de mise à zéro RST appliqué au circuit logique 6. Généralement dans cet état de mise à zéro, au moins le circuit de conversion tension-courant avec le miroir de courant et les comparateurs sont désactivés. Cependant il est envisageable d'avoir les signaux de commande comp1, comp2, Sc1 et Sc2 dans un état haut. Initialement les troisième et quatrième commutateurs 10, 11 sont fermés, ce qui décharge les deux condensateurs C1, C2, ainsi les signaux de comparaison comp1 et comp2 sont bien à l'état haut.

Dès l'instant où le signal de cadencement CK change d'état, par exemple sur un flanc montant, le circuit logique 6 commande la fermeture du premier commutateur 2 par le premier signal de commande S1. Le troisième commutateur 10 est également ouvert par le troisième signal de commande Sc1. Dès cet instant, une charge en tension sur le premier condensateur C1 intervient jusqu'au terme du temps t1, qui correspond à l'instant où la tension sur le condensateur C1 devient supérieure à la différence de tension entre la tension de sortie Vout et la tension d'entrée Vin. Le premier signal de comparaison comp1 passe de l'état haut à l'état bas pour commander le circuit logique 6, afin d'ouvrir le premier commutateur 2 par le premier signal de commande S1 et fermer le second commutateur 3 par le second signal de commande S2. Le quatrième commutateur 11 est commandé par le quatrième signal de commande Sc2 afin d'être ouvert. Dès cet instant, le second condensateur C2 se charge jusqu'à atteindre le niveau de la tension d'entrée Vin ce qui détermine le second temps d'enclenchement t2. Le second signal de comparaison comp2 passe de l'état haut à l'état bas pour commander le circuit logique 6. Le circuit logique 6 commande l'ouverture du second commutateur 3 par le second signal de commande S2, tout en maintenant le premier commutateur 2 ouvert jusqu'au terme de la période T du cycle s'asservissement du convertisseur DC-DC. Le troisième commutateur 10 peut être fermé par le troisième signal de commande Sc1, alors que le quatrième commutateur peut rester ouvert jusqu'au début d'un cycle successif.

A partir de la description qui vient d'être faite, plusieurs variantes du convertisseur DC-DC fonctionnant en mode discontinu peuvent être conçues par l'homme du métier sans sortir du cadre de l'invention définie par les revendications. Le convertisseur DC-DC peut comprendre deux sorties avec une seule inductance comme élément réactif.

**Revendications**

1. Convertisseur DC-DC (1), qui comprend une inductance (L) en tant qu'élément réactif, pour permettre en coopération d'un ensemble d'au moins un premier commutateur (2) commandé par un premier signal de commande (S1) et un second commutateur (3) commandé par un second signal de commande (S2), fonctionnant en alternance, de fournir une tension de sortie (Vout) d'un niveau supérieur, égal ou inférieur au niveau d'une tension d'entrée (Vin), le convertisseur comprenant également une unité de gestion de commutation (20) des commutateurs pour déterminer un premier temps d'enclenchement du premier commutateur (2) durant lequel un courant croissant traverse l'inductance, et un second temps d'enclenchement du second commutateur (3) durant lequel un courant décroissant traverse l'inductance, **caractérisé en ce que** l'unité de gestion de commutation (20) comprend un circuit de conversion tension-courant pour convertir en courant une tension de comparaison, qui est la différence entre la tension de sortie (Vout) et la tension d'entrée (Vin), un premier courant (I1) étant fourni par le circuit de conversion tension-courant pour charger un premier condensateur (C1) jusqu'à un premier seuil de tension pour déterminer le premier temps d'enclenchement (t1) et un second courant (I2) étant fourni par le circuit de conversion tension-courant pour charger un second condensateur (C2) jusqu'à un second seuil de tension pour déterminer le second temps d'enclenchement (t2).

2. Convertisseur DC-DC (1) selon la revendication 1, **caractérisé en ce que** le circuit de conversion tension-courant comprend un amplificateur-comparateur (5), dont une première entrée reçoit la différence entre la tension de sortie (Vout) et la tension d'entrée (Vin), et une seconde entrée est reliée à une résistance (R), et **en ce qu'**une sortie de l'amplificateur-comparateur (5) commande un miroir de courant (7, 7', 7"), dont une première branche est reliée en série à la résistance (R) pour déterminer un courant de base (I) à miroiter dans le miroir de courant pour définir un premier courant (I1) dans une seconde branche (7') et un second courant (I2) dans une troisième branche (7") du miroir de courant.

3. Convertisseur DC-DC (1) selon la revendication 2, **caractérisé en ce que** la différence entre la tension de sortie (Vout) et la tension d'entrée (Vin) est fournie à une entrée négative de l'amplificateur-comparateur (5), et **en ce qu'**un noeud de connexion de la résistance (R) à la première branche (7) du miroir de courant est relié à une entrée positive de l'amplificateur-comparateur (5), la résistance (R) étant reliée à une borne de masse.

4. Convertisseur DC-DC (1) selon la revendication 3, **caractérisé en ce que** le miroir de courant est composé de transistors de type PMOS disposés en parallèle, une source de chaque transistor étant reliée à une borne de tension positive, une grille de chaque transistor étant reliée à la sortie de l'amplificateur-comparateur (5), **en ce qu'**un drain d'au moins un premier transistor PMOS dans la première branche est relié à la résistance et à l'entrée positive de l'amplificateur-comparateur (5), **en ce qu'**un drain d'au moins un second transistor PMOS est relié au premier condensateur (C1) pour fournir un premier courant de charge (I1), et **en ce qu'**un drain d'au moins un troisième transistor PMOS est relié au second condensateur (C2) pour fournir un second courant de charge (I2).

5. Convertisseur DC-DC (1) selon l'une des revendications précédentes, **caractérisé en ce que** l'unité de gestion de commutation (20) comprend un soustracteur (4) recevant à une premier entrée la tension de sortie (Vout) et à une seconde entrée la tension d'entrée (Vin) pour fournir un signal de sortie, qui est la différence entre la tension de sortie (Vout) et la tension d'entrée (Vin).

6. Convertisseur DC-DC (1) selon l'une des revendications précédentes, **caractérisé en ce que** dans l'unité de gestion de commutation (20), un troisième commutateur (10) est relié et placé en parallèle du premier condensateur (C1), le troisième commutateur (10) étant commandé par un troisième signal de commande (Sc1) fourni par un circuit logique (6), le troisième commutateur étant dans un état fermé pour décharger le premier condensateur (C1) et dans un état ouvert pour charger le premier condensateur (C1) pour déterminer le premier temps d'enclenchement (t1), et **en ce qu'**un quatrième commutateur (11) est relié et placé en parallèle du second condensateur (C2), le quatrième commutateur (11) étant commandé par un quatrième signal de commande (Sc2) fourni par le circuit logique (6), le quatrième commutateur étant dans un état fermé pour décharger le second condensateur (C2) et dans un état ouvert pour charger le second condensateur (C2) pour déterminer le second temps d'enclenchement (t2).

7. Convertisseur DC-DC (1) selon l'une des revendications précédentes, **caractérisé en ce que** l'unité de gestion de commutation (20) comprend un premier comparateur (8) pour comparer le premier seuil de tension avec la tension sur le premier condensateur (C1) en phase de charge pour déterminer le premier temps d'enclenchement du premier commutateur (2), un premier signal de comparaison (comp1) étant fourni par le premier comparateur (8) pour commander un circuit logique (6), afin de maintenir fermé le premier commutateur (2), quand la tension sur le premier condensateur est en-dessous du premier seuil de tension et ouvrir le premier commutateur (2), quand la tension sur le premier condensateur est en-dessus du premier seuil de tension.

8. Convertisseur DC-DC (1) selon la revendication 7, **caractérisé en ce que** le premier seuil de tension est la différence entre la tension de sortie (Vout) et la tension d'entrée (Vin).

9. Convertisseur DC-DC (1) selon l'une des revendications précédentes, **caractérisé en ce que** l'unité de gestion de commutation (20) comprend un second comparateur (9) pour comparer le second seuil de tension avec la tension sur le second condensateur (C2) en phase de charge pour déterminer le second temps d'enclenchement du second commutateur (3), un second signal de comparaison (comp2) étant fourni par le second comparateur (9) pour commander un circuit logique (6), afin de maintenir fermé le second commutateur (3), quand la tension sur le second condensateur est en-dessous du second seuil de tension et ouvrir le second commutateur (3), quand la tension sur le second condensateur est en-dessus du second seuil de tension.

10. Convertisseur DC-DC (1) selon la revendication 9, **caractérisé en ce que** le second seuil de tension est la tension d'entrée (Vin).

11. Convertisseur DC-DC (1) selon la revendication 2, **caractérisé en ce que** le courant de base (I) est identique au premier courant (I1), et **en ce que** le premier seuil de tension est égal à la différence entre la tension de sortie (Vout) et la tension d'entrée (Vin) de manière que le premier temps d'enclenchement (t1) du premier commutateur (2) est déterminé par la valeur résistive de la résistance (R) multipliée par la capacité du premier condensateur (C1).

12. Convertisseur DC-DC (1) selon la revendication 11, **caractérisé en ce que** le courant de base est identique au second courant (I2), **en ce que** la capacité du premier condensateur (C1) est égale à la capacité du second condensateur (C2), et **en ce que** le second seuil de tension est égal à la tension d'entrée (Vin) pour que le second temps d'enclenchement (t2) du second commutateur (3) est déterminé par la formule $t2 = t1 \cdot (Vin/(Vout-Vin))$, où t1 est le premier temps d'enclenchement, t2 est le second temps d'enclenchement, Vin est la tension d'entrée et Vout est la tension de sortie.

13. Convertisseur DC-DC (1) selon la revendication 1, **caractérisé en ce que** l'unité de gestion de commutation (20) comprend un circuit logique (6), qui est cadencé par un signal de cadencement (CK) afin de définir chaque cycle d'asservissement du convertisseur DC-DC, et qui fournit les premier et second signaux de commande (S1, S2) aux premier et second commutateurs (2, 3).

14. Procédé de mise en action d'un convertisseur DC-DC (1) selon l'une des revendications précédentes, **caractérisé en ce que** le procédé comprend dans chaque cycle d'asservissement du convertisseur DC-DC, des étapes consistant à :

    - fermer le premier commutateur (2) par le premier signal de commande (S1) avec le second commutateur (3) dans un état ouvert, un premier courant (I1) étant fourni par le circuit de conversion tension-courant pour charger le premier condensateur (C1) jusqu'à un premier seuil de tension pour déterminer le premier temps d'enclenchement (t1) du premier commutateur, et
    - au terme du premier temps d'enclenchement, fermer le second commutateur (3) par le second signal de commande (S2) avec le premier commutateur (2) commandé pour être ouvert, un second courant (I2) étant fourni par le circuit de conversion tension-courant pour charger le second condensateur (C2) jusqu'à un second seuil de tension pour déterminer le second temps d'enclenchement (t2) du second commutateur.

15. Procédé de mise en action d'un convertisseur DC-DC (1) selon la revendication 14, **caractérisé en ce que** le premier condensateur (C1) est chargé par le premier courant (I1) pour déterminer le premier temps d'enclenchement (t1) jusqu'à ce que la tension sur le premier condensateur (C1) atteigne le premier seuil de tension, qui est la différence entre la tension de sortie (Vout) et la tension d'entrée (Vin).

16. Procédé de mise en action d'un convertisseur DC-DC (1) selon la revendication 14, **caractérisé en ce que** le second condensateur (C2) est chargé par le second courant (I2) pour déterminer le second temps d'enclenchement (t2) jusqu'à ce que la tension sur le second condensateur (C2) atteigne le second seuil de tension, qui est la tension d'entrée (Vin).

## Fig. 1

# Fig. 2

Fig. 3

Europäisches
Patentamt

European
Patent Office

Office européen
des brevets

**RAPPORT DE RECHERCHE EUROPEENNE**

Numéro de la demande

EP 13 19 5405

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 151 233 A (KONDO KATSUYOSHI [JP]) 21 novembre 2000 (2000-11-21) * colonne 1, ligne 40 - colonne 2, ligne 19 * * colonne 6, ligne 21 - ligne 29 * * colonne 11, ligne 59 - colonne 13, ligne 15 * * colonne 14, ligne 33 - colonne 26, ligne 26 * * figures 10,12,18 * ----- | 1-16 | INV. H02M3/158 ADD. H02M1/00 |
| X | US 2009/243577 A1 (LIM TEIK KAI [SG]) 1 octobre 2009 (2009-10-01) * alinéa [0004] - alinéa [0008] * * alinéa [0016] * * alinéa [0049] - alinéa [0126] * * figures 6A,6B,9B,10A,10B,13B * ----- | 1-16 | |
| X | EP 1 632 827 A1 (INFINEON TECHNOLOGIES AG [DE]) 8 mars 2006 (2006-03-08) * alinéa [0004] - alinéa [0008] * * alinéa [0014] - alinéa [0047] * * figure 1 * ----- | 1-16 | |

DOMAINES TECHNIQUES RECHERCHES (IPC)

H02M

Le présent rapport a été établi pour toutes les revendications

| Lieu de la recherche | Date d'achèvement de la recherche | Examinateur |
|---|---|---|
| La Haye | 29 avril 2014 | Lochhead, Steven |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 13 19 5405

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-04-2014

| Document brevet cité au rapport de recherche | | Date de publication | Membre(s) de la famille de brevet(s) | | Date de publication |
|---|---|---|---|---|---|
| US 6151233 | A | 21-11-2000 | JP | 3418672 B2 | 23-06-2003 |
| | | | JP | H11235022 A | 27-08-1999 |
| | | | US | 6151233 A | 21-11-2000 |
| US 2009243577 | A1 | 01-10-2009 | JP | 2009247202 A | 22-10-2009 |
| | | | US | 2009243577 A1 | 01-10-2009 |
| EP 1632827 | A1 | 08-03-2006 | DE | 602004006623 T2 | 17-01-2008 |
| | | | EP | 1632827 A1 | 08-03-2006 |
| | | | US | 2006061342 A1 | 23-03-2006 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- EP 2104213 B1